## Europäisches Patentamt
## European Patent Office
## Office européen des brevets

(19)

(11) Veröffentlichungsnummer: **0 014 952**
**B1**

(12)

# EUROPÄISCHE PATENTSCHRIFT

(45) Veröffentlichungstag der Patentschrift:
25.11.81

(51) Int. Cl.³: **G 03 B 27/62**

(21) Anmeldenummer: **80100724.6**

(22) Anmeldetag: **13.02.80**

(54) **Vorlagenhalteplatte für Vervielfältigungsgeräte.**

(30) Priorität: **23.02.79 DE 2907037**

(43) Veröffentlichungstag der Anmeldung:
**03.09.80 Patentblatt 80/18**

(45) Bekanntmachung des Hinweises auf die Patenterteilung:
**25.11.81 Patentblatt 81/47**

(84) Benannte Vertragsstaaten:
**BE FR GB IT NL**

(56) Entgegenhaltungen:
**DE-A-2 062 972**
**DE-A-2 119 741**
**FR-A-1 580 592**
**FR-A-1 601 805**
**GB-A-1 317 613**
**GB-A-1 460 193**
**US-A-3 186 097**
**US-A-3 676 241**
**US-A-3 802 102**
**US-A-4 111 550**

(73) Patentinhaber: **AGFA-GEVAERT Aktiengesellschaft, Camera-Werk Patent- und Lizenzwesen Postfach, D-8000 München 90 (DE)**

(72) Erfinder: **Webersik, Heinz, Klobensteiner Strasse 17b, D-8000 München 90 (DE)**

## Vorlagenhalteplatte für Vervielfältigungsgeräte

Die Erfindung betrifft eine Vorlagenhalteplatte für Vervielfältigungsgeräte, welche von mehreren Schichten eines flexiblen Materials gebildet wird, und welche an ihrer der Vorlage zugekehrten Unterseite eine helle, reflektierende Oberfläche aufweist.

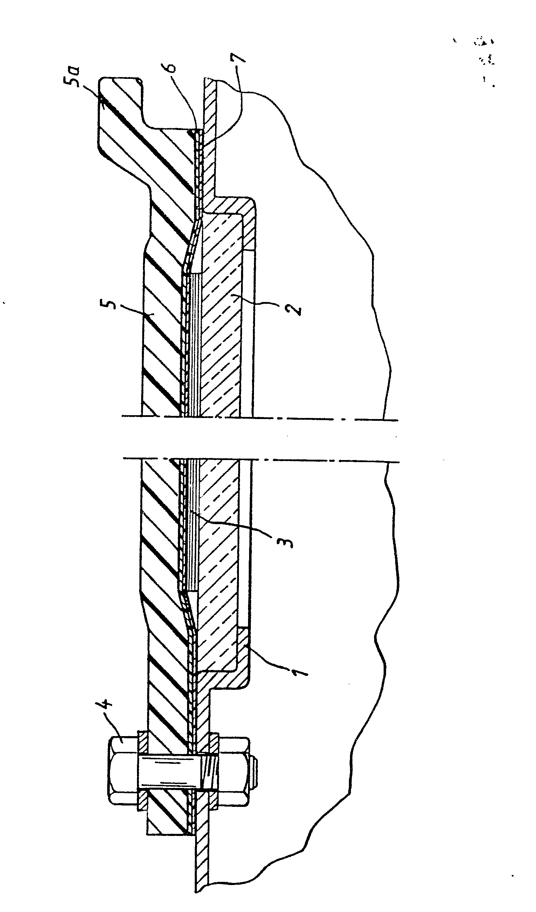

Derartige Vorlagenhalteplatten, wie sie z. B. Gegenstand des DE-Pat. 2 027 990 sind, dienen zum Festhalten der Vorlage auf der transparenten Vorlagenauflageplatte eines Kopiergerätes während des Kopiervorganges. Hierzu sollte die Unterseite der Halteplatte eine möglichst rein weiße, gut reflektierende Oberfläche aufweisen, welche in ihrem äußeren Erscheinungsbild der Papieroberfläche der üblicherweise zu kopierenden Vorlagen möglichst nahe kommt. Damit wird einmal erreicht, daß die Abbildung der Vorlage auch dann keine dunklen Ränder zeigt, wenn sich, wie es in der Regel der Fall ist, die Begrenzung der transparenten Auflageplatte nicht genau mit dem äußeren Vorlagenrand deckt. Zum anderen lassen sich mit Hilfe einer rein weißen, gut reflektierenden Halteplatte auch von dünnen oder durchscheinenden Vorlagen saubere Kopien mit rein weißem Untergrund herstellen.

Abgesehen von diesen Reflexionseigenschaften sollte die Unterseite der Vorlagenhalteplatte aber auch farb- und schmutzabweisend sein, damit sie im Kontakt mit auf der Vorlage noch befindlichen Farbresten, wie Kugelschreiberpaste, Kopierfarbe, Filzschreiber, Ormigpaste etc., nicht verschmutzt.

Weil der eigentliche Plattenkörper sowohl aus ästhetischen als auch aus praktischen Erwägungen möglichst keine rein weiße sondern eine relativ dunkle Farbe aufweisen sollte, und auch sonst Materialanforderungen unterliegt, welche von denen der Plattenunterseite etwas abweichen, werden die hier in Rede stehenden Vorlagenhalteplatten häufig aus mehreren Schichten zusammengesetzt, wobei der eigentliche Plattenkörper aus Polyvinylchlorid oder Gummi besteht und an seiner Unterseite mit einer weißen Kunststoffolie beklebt ist. Hierbei ergibt sich die Schwierigkeit, daß die Kunststoffolie, welche zur Erzielung der eingangs geschilderten Oberflächeneigenschaften einen relativ hohen Füllstoffanteil aufweisen muß, in der Regel nicht mehr genügend schmutzabweisend ist, und sich außerdem auch relativ schlecht mit der Polyvinylchlorid- oder Gummischicht des eigentlichen Plattenkörpers verbinden läßt. Falls die Folie trotz des hohen Füllstoffanteiles doch noch genügend farbabweisend ist, läßt sie sich in aller Regel besonders schlecht verkleben und weist außerdem eine, die Handhabung der Vorlagenhalteplatte insgesamt erschwerende, relativ große Steifigkeit auf.

Erfindungsgemäß ist nun die Unterseite der Halteplatte mit weißem Papier beklebt, dessen nach der Klebung außenliegende Oberflächenschicht mit einer glasklaren Kunststoffschicht kaschiert ist. Vorzugsweise wird die Kaschierung von einer Polypropylenfolie und die Papierschicht von Kunstpapier oder synthetischem Papier gebildet. Zweckmäßig ist die Papierschicht mittels eines handelsüblichen Klebers auf die aus Polyvinylchlorid oder Gummi bestehende Trägerschicht der Halteplatte aufgebracht und die glasklare Kunststoffschicht ist in bekannter Weise durch Wärme- und Druckeinwirkung mittels eines Schmelzklebers auf die Papierschicht vor deren Anbringung an der Halteplatte aufkaschiert.

Bei dieser erfindungsgemäßen Vorlagenhalteplatte sind die verschiedenen, vorstehend geschilderten Funktionen auf mehrere Schichten verteilt. Die papierartig reflektierenden Oberflächeneigenschaften werden tatsächlich von einer Papierschicht geliefert, welche sich überdies leicht an der Polyvinylchlorid- oder Gummischicht des eigentlichen Plattenkörpers, z. B. mittels einer Klebung, anbringen läßt. Den Schutz der empfindlichen Oberfläche übernimmt eine vorher aufkaschierte, glasklare Polypropylenfolie, welche in optimaler Weise hochelastisch und schmutzabweisend ist und ohne weiteres in optisch ansprechender Weise mit einer texturartigen Prägung versehen werden kann.

In der Zeichnung ist der Schichtaufbau einer erfindungsgemäßen Vorlagenhalteplatte beispielsweise dargestellt. Die einzige Figur zeigt einen halbschematischen Schnitt durch eine Vorlagenhalteplatte. Dabei ist in ein Gehäuseoberteil 1 eine transparente Auflageplatte 2 für eine Vorlage 3 eingelassen. Am Oberteil 1 ist mittels Schrauben 4 eine Vorlagenhalteplatte 5 befestigt, an deren den Befestigungsschrauben abgewandter Seitenkante eine Griffleiste 5a ausgebildet ist. Die Halteplatte 5, welche sich der Vorlage 3 möglichst gut anschmiegen soll, ist aus Polyvinylchlorid (PVC) oder Gummi gefertigt. Das Polyvinylchlorid bzw. der Gummi ist mit einer dunklen, z. B. dunkel grauen Farbe eingefärbt, damit die Handhabung der Halteplatte möglichst wenig sichtbare Spuren hinterlassen kann.

An der der Vorlage 3 zugekehrten Unterseite der Halteplatte 5 ist eine Papierschicht 6 angeklebt, welche mit einer dünnen, glasklaren Folie 7 kaschiert ist. Sie besteht vorzugsweise aus Kunstpapier bzw. synthetischem Papier, welches besonders gute Festigkeits- und Reflexionseigenschaften aufweist. Die Papierschicht 6 ist mittels eines für das Kleben von Papier auf PVC oder Gummi üblichen Klebers, z. B. Kunstkautschuk-Kontaktkleber, an der Halteplatte 5 angeklebt. Vor dem Ankleben an die Halteplatte 5 wird die Papierschicht 6 mittels eines handelsüblichen Kaschierverfahrens mit einer Abdeckfolie 7 aus einem glasklaren Kunststoff, beispielsweise Polypropylen (PP), belegt. Die

Abdeckfolie 7 wird dabei unter Wärme- und Druckeinwirkung mittels eines Schmelzklebers an der Papierschicht 6 befestigt. Als Schmelzkleber kommt beispielsweise das bei etwa 150 bis 160° C schmelzende Äthylenvinylazetat-Kopolymer (EVA) oder ein Thermoplast auf Polyamid-Basis in Frage.

## Ansprüche

1. Vorlagenhalteplatte für Vervielfältigungsgeräte, welche von mehreren Schichten eines flexiblen Materials gebildet wird, und welche an ihrer der Vorlage zugekehrten Unterseite eine helle, reflektierende Oberfläche aufweist, dadurch gekennzeichnet, daß die Unterseite der Halteplatte (5) mit weißem Papier (6) beklebt ist, dessen nach der Klebung außenliegende Oberflächenschicht mit einer glasklaren Kunststoffolie (7) kaschiert ist.

2. Vorlagenhalteplatte nach Anspruch 1, dadurch gekennzeichnet, daß die Kaschierung (7) von einer Polypropylenfolie gebildet wird.

3. Vorlagenhalteplatte nach Anspruch 1 oder 2, dadurch gekennzeichnet, daß die Papierschicht (6) von Kunstpapier oder synthetischem Papier gebildet wird.

4. Vorlagenhalteplatte nach einem der Ansprüche 1 bis 3, dadurch gekennzeichnet, daß die Papierschicht (6) mittels eines handelsüblichen Klebers auf die aus Polyvinylchlorid oder Gummi bestehende Trägerschicht (5) der Halteplatte aufgebracht ist.

5. Vorlagenhalteplatte nach einem der vorhergehenden Ansprüche, dadurch gekennzeichnet, daß · die glasklare Kunststoffschicht (7) in bekannter Weise unter Wärme- und Druckeinwirkung mittels eines Schmelzklebers auf die Papierschicht (6) vor deren Anbringung an der Vorlagenhalteplatte (5) aufkaschiert ist.

## Claims

1. Plate for holding originals for duplicating apparatus which is formed by several layers of a flexible material and on its underside, facing the original, has a lieght-coloured, reflecting surface, characterised in that to the underside of the holding plate (5) there is bonded white paper (6), of which the surface layer that lies on the outside after bonding is coated with a transparent plastics film (7).

2. Plate for holding originals according to claim 1, characterised in that the coating (7) is formed by a polypropylene film.

3. Plate for holding originals according to claim 1 or 2, characterised in that the paper layer (6) is formed from plastics paper or synthetic paper.

4. Plate for holding originals according to one of claims 1 to 3, characterised in that the paper layer (6) is attached to the support layer (5) of the holding plate, which support layer consists of polyvinyl chloride or rubber, by means of a commercially available adhesive.

5. Plate for holding originals according to one of the preceding claims, characterised in that the transparent plastics layer (7) is coated in known manner onto the paper layer (6) under the action of heat and pressure and by means of a thermoplastic adhesive, before the paper layer (6) is attached to the plate (5) for holding originals.

## Revendications

1. Plaque de maintien de l'original pour machines à polycopier, qui est constituée de plusieurs couches d'une matière souple et dont la face inférieure tournée vers l'original présente une surface réfléchissante claire, caractérisée en ce que sur la face inférieure de la plaque (5) de maintien est collé du papier (6) blanc, dont la couche superficielle, se trouvant à l'extérieur après le collage, est revêtue d'une feuille (7) de matière plastique limpide comme du verre.

2. Plaque de maintien de l'original suivant la revendication 1, caractérisée en ce que le revêtement (7) est constitué d'une feuille de polypropylène.

3. Plaque de maintien de l'original suivant la revendication 1 ou 2, caractérisée en ce que la couche (6) de papier est en papier artificiel ou en papier synthétique.

4. Plaque de maintien de l'original suivant l'une des revendications 1 à 3, caractérisée en ce que la couche (6) de papier est déposée sur la couche (5) support de la plaque de maintien en polychlorure de vinyle ou en caoutchouc à l'aide d'une colle d'usage courant.

5. Plaque de maintien de l'original suivant l'une des revendications précédentes, caractérisée en ce que la couche (7) en matière plastique limpide comme le verre est appliquée en revêtement à la manière classique sous l'action de la chaleur et de la pression à l'aide d'une colle de fusion sur la couche (6) de papier, avant que celle-ci soit appliquée à la plaque (5) de maintien d'un original.